# EUROPEAN PATENT APPLICATION

(11) **EP 4 198 767 A1**
(43) Date of publication of application: **21.06.2023**
(21) Application number: 22201573.7
(22) Date of filing: 14.10.2022
(51) Int. Cl.: G06F 16/332

(54) **DATA PROCESSING METHOD FOR DIALOGUE SYSTEM, APPARATUS, DEVICE, AND MEDIUM**

(30) Priority: 17.12.2021 CN 202111555101
(71) Applicant: Beijing Baidu Netcom Science Technology Co., Ltd., Beijing 100085 (CN)
(72) Inventor: YUAN, Hao, Beijing, 100085 (CN); HU, Jianglu, Beijing, 100085 (CN); SUN, Huifeng, Beijing, 100085 (CN); SUN, Shuqi, Beijing, 100085 (CN); CHANG, Yue, Beijing, 100085 (CN); LI, Tingting, Beijing, 100085 (CN)
(74) Representative: Deambrogi, Edgardo

(57) **Abstract**

Provided are a data processing method for a dialogue system, an apparatus, a device, and a medium. The method includes: obtaining a pre-configured task description, wherein the task description comprises at least one task name and at least one task attribute corresponding to a respective task name; extracting, based on a reading comprehension technique, an answer corresponding to the task description from content of a current dialogue with a user; and completing the dialogue with the user according to the answer and a pre-generated dialogue flow.

## Description

### TECHNICAL FIELD

The present disclosure relates to the field of data processing technology, in particular, to the fields of artificial intelligence, natural language processing, voice technology, and deep learning technology, and specifically to a data processing method for a dialogue system, an apparatus, a device, a medium, and a program product.

### BACKGROUND

Task-oriented dialogue systems are increasingly used in various practical scenarios. People can easily and quickly realize the needs in different scenarios, such as the purchase of goods, ticket booking, and other needs, using self-service voice dialogue.

Existing task-oriented dialogue systems are usually implemented in a pipeline-based manner. This kind of dialogue system is divided into multiple modules, and each module is responsible for a different sub-task and cooperates to accomplish a dialogue goal as a whole. However, this kind of system is complex to build, and each module needs to be trained and set up separately. Therefore, the system requires more involvement from developers, which is a high threshold for most ordinary developers. The system requires both a certain learning cost and a data cost (which is more expensive for developers in the early stages) so development efficiency is low.

### SUMMARY

The present disclosure provides a data processing method for a dialogue system, an apparatus, a device, a medium, and a program product.

According to an aspect of the present disclosure, a data processing method for a dialogue system is provided. The method includes: obtaining a pre-configured task description, where the task description includes at least one task name and at least one task attribute corresponding to a respective task name; extracting, based on a reading comprehension technique, an answer corresponding to the task description from the content of a current dialogue with a user; and completing the dialogue with the user according to the answer and a pre-generated dialogue flow.

According to another aspect of the present disclosure, a data processing apparatus for a dialogue system is provided. The apparatus includes:
a task description acquiring module configured to obtain a pre-configured task description, where the task description includes at least one task name and at least one task attribute corresponding to a respective task name;
a reading comprehension module configured to extract, based on a reading comprehension technique, an answer corresponding to the task description from the content of a current dialogue with a user; and
a dialogue module configured to complete the dialogue with the user according to the answer and a pre-generated dialogue flow.

According to another aspect of the present disclosure, an electronic device is provided. The electronic device includes: at least one processor; and a memory communicatively connected to the at least one processor; where the memory stores an instruction executable by the at least one processor, and the instruction is executed by the at least one processor to cause the at least one processor to perform the data processing method for a dialogue system according to any embodiment of the present disclosure.

According to another aspect of the present disclosure, a non-transitory computer-readable storage medium storing a computer instruction is provided. The computer instruction is configured to cause a computer to perform the data processing method for a dialogue system according to any embodiment of the present disclosure.

According to another aspect of the present disclosure, a computer program product is provided. The computer program product includes a computer program which, when executed by a processor, causes the processor to implement the data processing method for a dialogue system according to any embodiment of the present disclosure.

It is to be understood that the content described in this part is neither intended to identify key or important features of embodiments of the present disclosure nor intended to limit the scope of the present disclosure. Other features of the present disclosure are apparent from the description provided hereinafter.

### BRIEF DESCRIPTION OF DRAWINGS

The drawings are intended to provide a better understanding of the scheme and not to limit the present disclosure. In the drawings:
FIG. 1 is a diagram showing a data processing method for a dialogue system according to an embodiment of the present disclosure;
FIG. 2 is a diagram showing a data processing method for a dialogue system according to an embodiment of the present disclosure;
FIG. 3 is a diagram showing an example of extracting an answer according to an embodiment of the present disclosure;
FIG. 4 is a diagram showing a data processing method for a dialogue system according to an embodiment of the present disclosure;
FIG. 5 is a diagram showing generation of a dialogue flow in an embodiment of the present disclosure;
FIG. 6 is a diagram showing an example of determining a dialogue policy according to an embodiment of the present disclosure;
FIG. 7 is a diagram of a data processing apparatus for a dialogue system according to an embodiment of the present disclosure; and
FIG. 8 is a block diagram of an electronic device for implementing a data processing method for a dialogue system according to an embodiment of the present disclosure.

### DETAILED DESCRIPTION

Exemplary embodiments of the present disclosure, including details of embodiments of the present disclosure, are described hereinafter in conjunction with drawings to facilitate understanding. The exemplary embodiments are only illustrative. Therefore, it is to be appreciated by those of ordinary skill in the art that various changes and modifications may be made to the embodiments described herein without departing from the scope and spirit of the present disclosure. Similarly, the description of well-known functions and constructions is omitted hereinafter for clarity and conciseness.

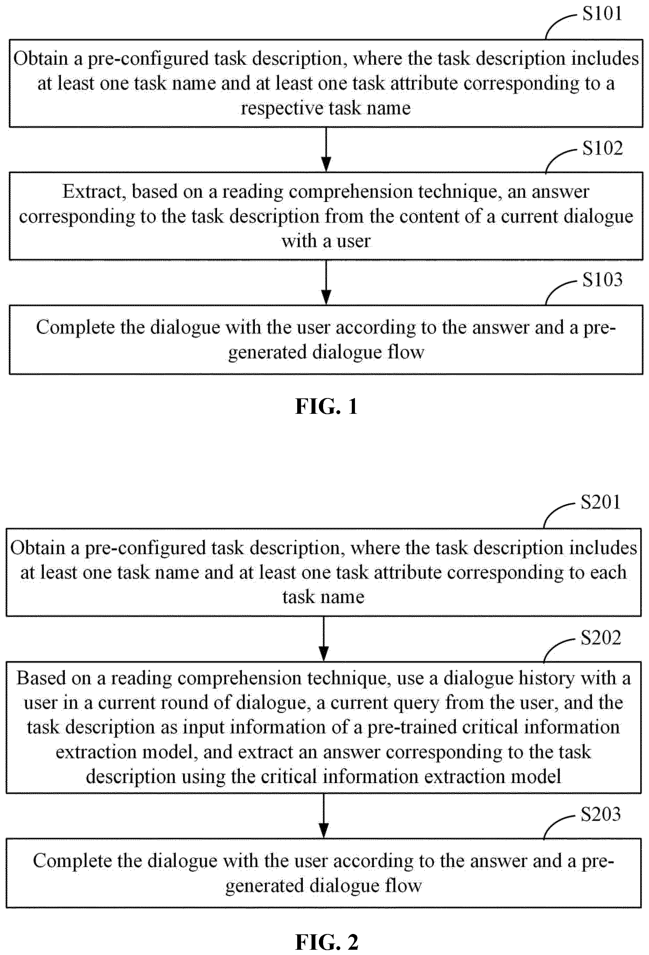

FIG. 1 is a diagram showing a data processing method for a dialogue system according to an embodiment of the present disclosure. The embodiment is applicable to the case where a dialogue task with a user is completed using a constructed dialogue system, and the embodiment relates to the field of data processing technology and in particular relates to the fields of artificial intelligence, natural language processing, voice technology, and deep learning technology. The method may be performed by a data processing apparatus for a dialogue system. The apparatus is implemented in software and/or hardware, and the apparatus is preferably configured in an electronic device, such as a computer device, a server, or the like. As shown in FIG. 1, the method specifically includes the following.

In S101, a pre-configured task description is obtained. The task description includes at least one task name and at least one task attribute corresponding to a respective task name.

A developer's intention to build a dialogue system is to expect the dialogue system to help a user accomplish a certain task. In the embodiment of the present disclosure, when the developer needs to build the dialogue system, a task description related to the task, including a task name and its task attribute, needs to be pre-configured. For example, the task name may be "order a drink", and corresponding task attributes may include "the type of beverage", "temperature", "the number of cups", and the like. Multiple task names may be configured, and thus the dialogue system successfully built can complete a dialogue for multiple tasks.

In S 102, an answer corresponding to the task description from the content of a current dialogue with a user is extracted, based on a reading comprehension technique.

The content of the current dialogue may include the content of a dialogue which is previously generated between the dialogue system and the user after a current round of dialogue is opened, the content of a dialogue includes reply information of the dialogue system to the user and a query outputted by the user. The content of a dialogue may be voice data or text data.

In the embodiment of the present disclosure, according to the reading comprehension technique, the answer corresponding to the task description is extracted from the content of the current dialogue with the user. The answer corresponding to the task description is what task name the user wants to complete and what corresponding task attributes are respectively, for example, whether the user wants to "order a drink", whether the drink the user wants to order is milk tea or juice, room temperature or with ice, and how many cups to order. When the dialogue system extracts the answer corresponding to the task description and all task attributes for executing a certain task are obtained, the corresponding task can be executed, and the dialogue can be ended.

In S103, the dialogue with the user is completed according to the answer and a pre-generated dialogue flow.

The dialogue flow is generated at the time of construction of the dialogue system and is configured to determine, based on the extracted answer, a dialogue policy. The determination of the dialogue policy includes the following: whether a task is currently to be executed, whether the dialogue is to be ended, or whether to continue to collect answers of the task description by clarification. With the dialogue policy, dialogue reply information can be generated according to the dialogue policy and returned to the user. Through multi-round dialogues, when the dialogue system collects an answer which satisfies a task execution condition, a task may be executed and the current dialogue may be ended.

It should be noted that in the related art, when the dialogue system is being built it is generally necessary to acquire, according to a usage scenario, a large amount of intention data to train an intention recognition model, perform intention recognition on input from the user using the intention recognition model and then complete a dialogue according to the intention of the user. In this manner, it not only imposes higher technical requirements on developers and requires a certain cost of learning to use, but also requires a high cost of data, especially the initial cost of data which is more expensive for developers, which makes it difficult for many developers to quickly start building their own dialogue systems, resulting in a high development cost and low efficiency of building dialogue systems.

The technical schemes of the embodiment of the present disclosure are different from the related art. The dialogue system of the present disclosure is a dialogue system based on a task description. It is not necessary to acquire a large amount of intention data to train the intention recognition model, and the construction of the dialogue system can be achieved only by pre-configuring the task description. The constructed dialogue system extracts, based on the reading comprehension technique, the answer corresponding to the task description from the content of the current dialogue with the user, thereby completing the dialogue with the user according to the answer and the pre-generated dialogue flow. For developers, the cost of data for constructing the dialogue system is low, and it is easy to start. Thus, the efficiency of developing the dialogue system is improved.

FIG. 2 is a diagram showing a data processing method for a dialogue system according to an embodiment of the present disclosure, which is further optimized based on the above-described embodiment. As shown in FIG. 2, the method specifically includes the following.

In S201, a pre-configured task description is obtained. The task description includes at least one task name and at least one task attribute corresponding to a respective task name.

In S202, based on a reading comprehension technique, a dialogue history with a user in a current round of dialogue, a current query from the user, and the task description are used as input information of a pre-trained key information extraction model, and an answer corresponding to the task description is extracted using the key information extraction model.

The key information extraction model is a pre-trained model for extracting an answer from the content of a dialogue with a user, based on the reading understanding technique. Data inputted into the model includes the dialogue history, the current query from the user (text or a voice currently inputted by the user), and the task description. The dialogue history includes the content of the dialogue between the dialogue system and the user from the time when the current round of dialogue is opened to the current query from the user. The current query from the user is a dialogue outputted by the user for the last dialogue reply information of the dialogue system. Each time a new current query from the user is acquired, a previous dialogue history, the current query from the user, and a task description pre-configured by developers are inputted into the model, and the model performs recognition, from which a current answer is extracted. Thereafter, the dialogue system can respond again according to the current answer and return generated dialogue reply information to the user again. In this manner, answers are continuously being collected during multiple dialogues with the user until a task execution condition is satisfied.

In addition, the task description may also include multiple examples of the task name and the task attribute. For example, for a task attribute "the type of beverage", its examples may be "juice", "milk tea" or "cola". In this manner, examples, the task name, and the task attribute together serve as targets of information extraction, and the accuracy of the model to extract answers is further improved.

In an embodiment, the key information extraction model is specifically configured to: perform four classifications according to input information, where the result of the four classifications is configured to indicate whether a task name is expressed in the content of a current dialogue or whether a task attribute is expressed in the content of the current dialogue; in response to the result of the four classifications indicating that the task attribute is expressed in the content of the current dialogue, perform sequence labeling on a current query from the user in the input information, where the result of the sequence labeling indicates a position of an answer corresponding to the task attribute in the current query from the user; and determine the answer corresponding to the task description based on the result of the four classifications and the result of the sequence labeling.

In an embodiment, if task names in the pre-configured task description includes "booking" and "music", task attributes for "booking" include "origin", "destination", "date", and "seat", and task attributes for "music" include "song name" and "artist name". After a current round of dialogue is opened, if the user says "Help me book a train ticket to Beijing tomorrow.", the key information extraction model firstly carries out four classifications to recognize that the task name "booking" is expressed in the content of the current dialogue and however the task name "music" is not expressed in the content of the current dialogue, and a task attribute related to "booking" is expressed and however a task attribute related to "music" is not expressed. Then, sequence labeling may be performed on the current query from the user, and the position of the answer corresponding to the task attribute in the current query from the user is labeled. Based on the position, the task attribute "destination", i.e., Beijing, can be extracted and the task attribute "date", i.e., tomorrow, can be extracted. Thus, the answers currently extracted are that the task name is "booking", the "destination" is Beijing, and the "date" is tomorrow.

Further, the main body of the key information extraction model may adopt a pre-trained semantic recognition model. The semantic recognition model may be, for example, a pre-trained ernie model. The pre-trained semantic recognition model has a strong semantic recognition capability. Adaptive training is performed on the pre-trained semantic recognition model, and a key information extraction model applicable to a current scenario can be obtained, thereby improving the efficiency of development. Training sample data for training the key information extraction model may be large-scale logs from an existing dialogue customization platform or other dialogue samples, the training sample data includes a dialogue history and a dialogue state, a positive example in which an intention and a slot which exist in the dialogue state are used as a task name and a task attribute, respectively, and a negative example in which an intention and a slot which do not exist in the dialogue state are used as a task name and a task attribute, respectively. In addition, multiple negative examples may be sampled to balance the proportion of positive and negative samples.

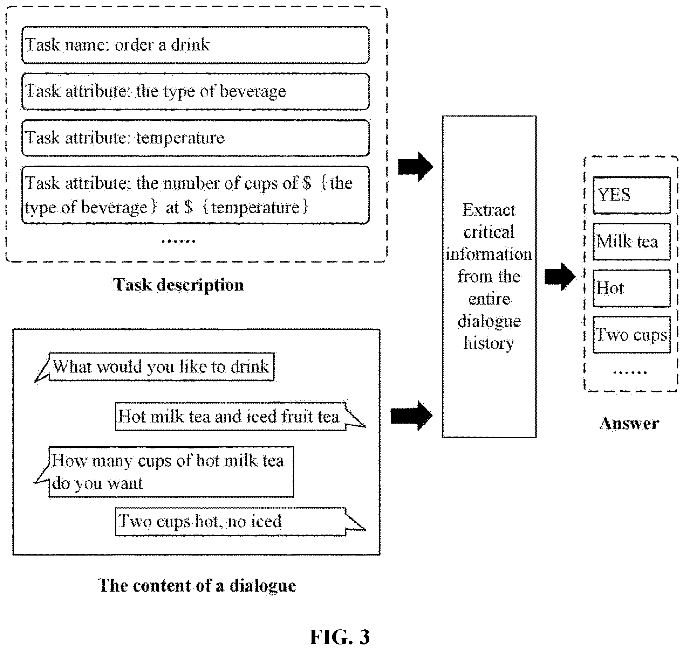

FIG. 3 is a diagram showing an example of extracting an answer according to an embodiment of the present disclosure. As can be seen from the figure, the answer corresponding to the task description can be extracted from the dialogue history. In this case, "YES" means that the task name "order a drink" is expressed in the content of a dialogue, so answers related to task attributes of the task "order a drink" are extracted. "milk tea", "hot", and "two cups" are answers to corresponding task attributes. The task of ordering a drink for a user can be accomplished based on the final extracted answers.

In S203, the dialogue with the user is completed according to the answer and a pre-generated dialogue flow.

According to the technical scheme of the embodiment of the present disclosure, based on the reading comprehension technique, the dialogue history, the current query from the user, and the task description are used as input information of the pre-trained key information extraction model, and the answer corresponding to the task description is extracted using the key information extraction model. Finally, the dialogue with the user is completed according to the answer and the pre-generated dialogue flow. In the process of constructing the dialogue system according to the embodiment of the present disclosure, the key information extraction model extracts, based on the reading understanding technology, the answer corresponding to the task description from the content of the dialogue, and thus the key information extraction model is unlike the intention recognition model in the related art. Developers do not need to acquire a large amount of intention data to train the key information extraction model, and the construction of the dialogue system can be achieved only by pre-configuring the task description. Therefore, for developers, the cost of data for constructing the dialogue system based on the task description is low, the problem of a cold start with zero samples is solved, the configuration cost is low, it is easy to start, and the efficiency of developing the dialogue system is improved overall.

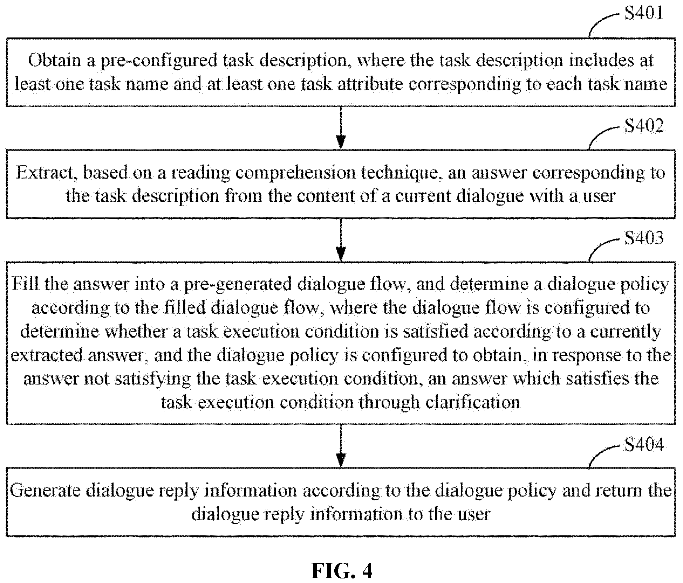

FIG. 4 is a diagram showing a data processing method for a dialogue system according to an embodiment of the present disclosure, which is further optimized based on the above-described embodiment. As shown in FIG. 4, the method specifically includes the following.

In S401, a pre-configured task description is obtained. The task description includes at least one task name and at least one task attribute corresponding to a respective task name.

In S402, an answer corresponding to the task description from the content of a current dialogue with a user is extracted, based on a reading comprehension technique.

In S403, the answer is filled into a pre-generated dialogue flow, and a dialogue policy is determined according to the filled dialogue flow. The dialogue flow is configured to determine whether a task execution condition is satisfied according to a currently extracted answer, and the dialogue policy is configured to obtain, in response to the answer not satisfying the task execution condition, an answer which satisfies the task execution condition through clarification.

In the dialogue system, after the answer is extracted, the dialogue policy needs to be determined according to the answer and the pre-generated dialogue flow, and dialogue reply information is generated according to the dialogue policy and returned to the user. The dialogue flow is configured to determine whether the task execution condition is satisfied according to the currently extracted answer. If the condition is satisfied, the dialogue policy may be to end the dialogue after a concluding remark is generated. If the condition is not satisfied, answers need to be further collected until the task execution condition is satisfied, and thus an answer which satisfies the task execution condition needs to be obtained through clarification.

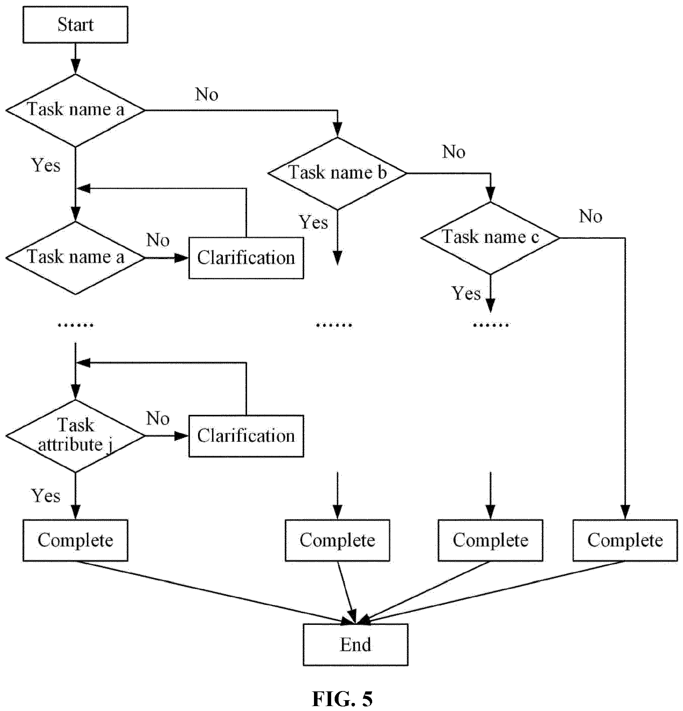

In an embodiment of the present disclosure, the dialogue flow is generated according to the task description. FIG. 5 is a diagram showing generation of a dialogue flow in an embodiment of the present disclosure. As shown in the figure, the configured task description may include multiple task names, such as task name a, task name b, and task name c, and multiple task attributes i-j correspond to different task names. When it is recognized that task name a is expressed in the content of a dialogue, the collection of multiple task attributes corresponding to task name a is continued. When the task attributes are not obtained, the task attributes may be obtained again by clarification. When all tasks and attributes under task name a in a task flow are acquired, it is determined that the task execution condition is satisfied, thereby ending the dialogue flow and executing a task. Therefore, the dialogue policy is also configured to end the dialogue when the answer satisfies the task execution condition. In addition, an upper limit value may be set for the number of times of clarification to avoid entering an endless loop, that is, when the answer does not satisfy the task execution condition and the number of times of clarification reaches the preset upper limit value, the dialogue is ended.

To further improve the efficiency of developing the dialogue system, the dialogue flow in the embodiments of the present disclosure may be automatically generated based on the task description pre-configured by developers and the Schema Guided (rule pattern guidance) technique. Different from a scheme of the related art in which a dialogue flowchart needs to be customized by developers through a graphical interface, the embodiments of the present disclosure do not require the participation of developers in the customization and only require the configuration of the task description, so that automatic construction can be achieved and the degree of automation is higher.

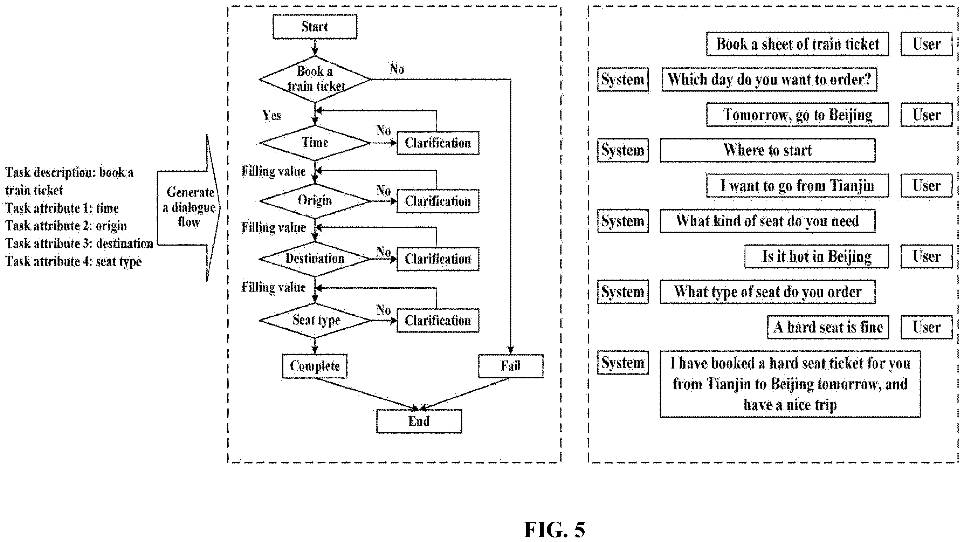

FIG. 6 is a diagram showing an example of determining a dialogue policy according to an embodiment of the present disclosure. As shown in the figure, in the configured task description, the task name is "book a train ticket", and the corresponding task attributes include "time", "origin", "destination", and "seat type". After an answer is extracted, the answer can be filled into the pre-generated dialogue flow. It is determined whether the task execution condition is satisfied. If the task execution condition is not satisfied, the collection of task attributes through clarification is continued until an answer corresponding to the task description satisfies the task execution condition.

In FIG. 6, when a user says "Book a sheet of train ticket.", the dialogue system can extract the task name "book a train ticket" from the dialogue, but the dialogue does not express any task attribute. Then, the dialogue policy may ask the user the question "Which day do you want to order?" to collect an answer to the task attribute "time". When the user says "Tomorrow, go to Beijing.", the dialogue system can extract the task attribute "time" which is tomorrow and the task attribute "destination" which is Beijing. Then, the dialogue policy may continue to collect the task attribute "origin" and says "Where to start?". When the user says "I want to go from Tianjin.", the dialogue system can extract the task attribute "origin" which is Tianjin. The dialogue policy needs to continue to collect an answer to the task attribute "seat type" and then asks "What kind of seat do you need?". But the user gives feedback that "Is it hot in Beijing?". At this point, the dialogue system recognizes that no task attribute is expressed in the dialogue, so the dialogue system clarifies "What type of seat do you order?". The user replied "A hard seat is fine.", so the dialogue system extracted the answer to the task attribute "seat type", which is a hard seat. Answers to all task names and task attributes have been filled into the task flow, and the task execution condition has been met. After the task of booking a ticket is executed, the user may be answered "I have booked a hard seat ticket for you from Tianjin to Beijing tomorrow, and have a nice trip." as a concluding remark, and the current dialogue is ended.

In S404, dialogue reply information is generated according to the dialogue policy and returned to the user.

Specifically, generating the dialogue reply information may include: generating a first set of dialogue reply information according to the dialogue policy and a reply template which is configured in advance at an execution node of the dialogue flow; generating a second set of dialogue reply information using a pre-trained dialogue model according to the dialogue policy; scoring each dialogue reply information in the first set of dialogue reply information and the second set of dialogue reply information separately, based on a pre-trained scoring model; and determining the dialogue reply information returned to the user according to the result of the scoring.

The first manner is to generate dialogue reply information based on Schema Guided. Developers set the reply template in advance at a flow execution node in the dialogue flow. The dialogue system may generate the first set of dialogue reply information according to the dialogue policy and the reply template. The second manner is to generate the second set of dialogue reply information using the pre-trained dialogue model according to the dialogue policy. The dialogue model is generated using a controllable text generation framework, for example, using the large-scale latent variable dialogue model PLATO. The PLATO model based on Finetune can generate more smooth and more diverse responses.

The generation strategy based on Schema Guided is simple to control and has a strong task dependency. However, the generation strategy based on Schema Guided is relatively inflexible, fixed in form and not necessarily suitable for all scenarios. Responses generated according to the model-based generation strategy are relatively smooth and diverse, but less relevant and controllable. Thus, the dialogue system based on the task description in the embodiment of the present disclosure adopts the above two generation strategies at the same time and integrates the advantages of the two strategies. Multiple types of reply information generated by the two strategies are all scored using the pre-trained scoring model, the relevance and fluency are both considered, and the most appropriate dialogue reply information can be selected based on the result of scoring. The scoring model may use Long Short-Term Memory/Gated Recurrent Unit (LSTM/GRU) as main network structure, data is labeled by crowdsourcing, and the model is trained in an existing training manner. Therefore, details are not repeated herein.

According to the technical scheme of the embodiment of the present disclosure, developers only need to configure the task description so that the dialogue flow can be automatically generated. In the process of the dialogue, the answer corresponding to the task description is extracted from the content of the dialogue history according to the reading understanding technology, and then the dialogue policy is determined according to the answer and the pre-generated dialogue flow. Finally, the dialogue reply information is obtained according to the dialogue policy, thereby completing the dialogue with the user. Therefore, the dialogue system in the embodiment of the present disclosure is a dialogue system based on a task description. For developers, the cost of data for constructing the dialogue system is low, the problem of a cold start with zero samples is solved, the configuration cost is low, it is easy to start, and the efficiency of developing the dialogue system is improved overall. The entire dialogue system is in a high degree of automation and out-of-the-box. Dialogue understanding, dialogue policies, and dialogue generation do not require the customization by developers, and the entire system can be automatically built after developers provide the task description. Moreover, it is only necessary for the developers to provide multiple task descriptions for extending multiple task scenarios, additional configuration is needless, and the extension is more flexible.

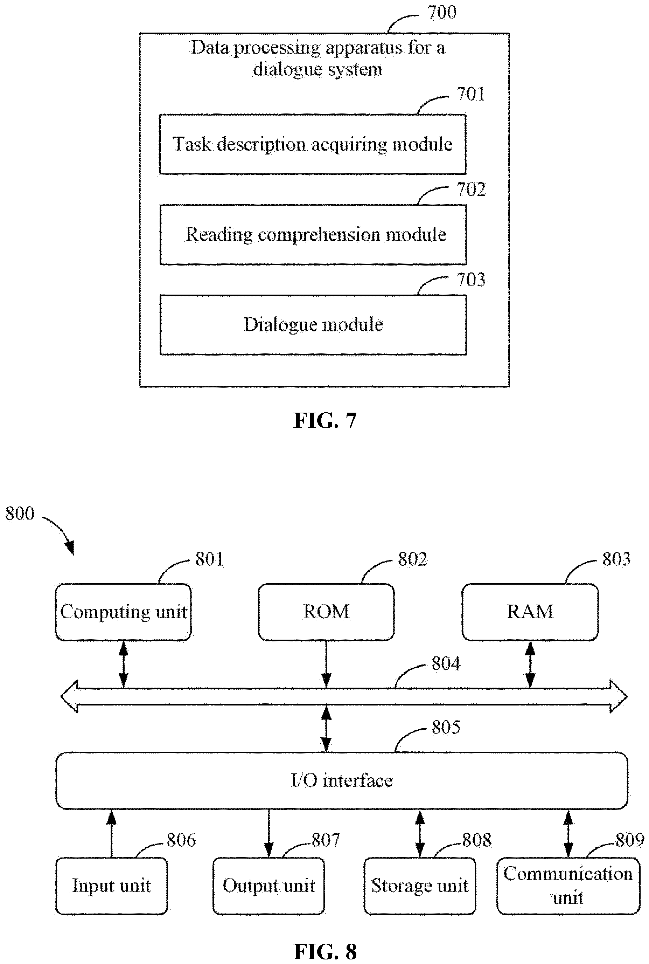

FIG. 7 is a diagram showing a data processing apparatus for a dialogue system according to an embodiment of the present disclosure. The embodiment is applicable to the case where a dialogue task with a user is completed using a constructed dialogue system. The embodiment relates to the field of data processing technology and in particular relates to the fields of artificial intelligence, natural language processing, voice technology, and deep learning technology. The apparatus can implement the data processing method for a dialogue system described in any embodiment of the present disclosure. As shown in FIG. 7, the apparatus 700 includes: a task description acquiring module 701, a reading comprehension module 702, and a dialogue module 703.

The task description acquiring module 701 is configured to obtain a pre-configured task description, where the task description includes at least one task name and at least one task attribute corresponding to a respective task name.

The reading comprehension module 702 is configured to extract, based on a reading comprehension technique, an answer corresponding to the task description from the content of a current dialogue with a user.

The dialogue module 703 is configured to complete the dialogue with the user according to the answer and a pre-generated dialogue flow.

Optionally, the reading comprehension module 702 is specifically configured to: based on the reading comprehension technique, use a dialogue history with the user in a current round of dialogue, a current query from the user, and the task description as input information of a pre-trained key information extraction model, and extract the answer corresponding to the task description using the key information extraction model.

Optionally, the key information extraction model is specifically configured to: perform four classifications according to the input information, where the result of the four classifications is configured to indicate whether a task name is expressed in the content of the current dialogue or whether a task attribute is expressed in the content of the current dialogue; in response to the result of the four classifications indicating that the task attribute is expressed in the content of the current dialogue, perform sequence labeling on the current query from the user in the input information, where the result of the sequence labeling indicates a position of the answer corresponding to the task attribute in the current query from the user; and determine the answer corresponding to the task description based on the result of the four classifications and the result of the sequence labeling.

Optionally, the main body of the key information extraction model is implemented by a pre-trained semantic recognition model.

Optionally, training sample data for training the key information extraction model includes a dialogue history and a dialogue state. An intention and a slot which exist in the dialogue state are used as a positive example of a task name and a positive example of a task attribute, respectively, and an intention and a slot which do not exist in the dialogue state are used as a negative example of a task name and a negative example of a task attribute, respectively.

Optionally, the dialogue module 703 includes:
a dialogue policy determining unit configured to fill the answer into the pre-generated dialogue flow, and determine a dialogue policy according to the filled dialogue flow, where the dialogue flow is configured to determine whether a task execution condition is satisfied according to a currently extracted answer, and the dialogue policy is configured to obtain, in response to the answer not satisfying the task execution condition, an answer which satisfies the task execution condition through clarification; and
a dialogue reply information generating unit configured to generate dialogue reply information according to the dialogue policy and return the dialogue reply information to the user.

Optionally, the dialogue policy is further configured to: in response to the answer not satisfying the task execution condition and the number of times of the clarification reaching a preset upper limit value, end the dialogue; and in response to the answer satisfying the task execution condition, end the dialogue.

Optionally, the dialogue reply information generating unit is specifically configured to: generate a first set of dialogue reply information according to the dialogue policy and a reply template which is configured in advance at an execution node of the dialogue flow; generate a second set of dialogue reply information using a pre-trained dialogue model according to the dialogue policy; score each dialogue reply information in the first set of dialogue reply information and the second set of dialogue reply information separately, based on a pre-trained scoring model; and determine the dialogue reply information returned to the user according to the result of the scoring.

Optionally, the dialogue flow is generated according to the task description.

Optionally, the task description further includes multiple examples of the task name and the task attribute.

The preceding product may perform the method provided by any embodiment of the present disclosure and has functional modules and beneficial effects corresponding to the executed method.

In the technical schemes of the present disclosure, the collection, storage, use, processing, transmission, provision, and disclosure of user personal information involved are in compliance with provisions of relevant laws and regulations and do not violate public order and good customs.

According to embodiments of the present disclosure, the present disclosure further provides an electronic device, a readable storage medium, and a computer program product.

FIG. 8 is a block diagram showing an example of an electronic device 800 which can be configured to perform embodiments of the present disclosure. The electronic device is intended to represent various forms of digital computers, for example, a laptop computer, a desktop computer, a workbench, a personal digital assistant, a server, a blade server, a mainframe computer, or another applicable computer. The electronic device may also represent various forms of mobile apparatuses, for example, a personal digital assistant, a cellphone, a smartphone, a wearable device, or a similar computing apparatus. Herein the shown components, the connections and relationships between these components, and the functions of these components are illustrative only and are not intended to limit the implementation of the present disclosure as described and/or claimed herein.

As shown in FIG. 8, the device 800 includes a computing unit 801. The computing unit 801 may perform various types of appropriate operations and processing based on a computer program stored in a read-only memory (ROM) 802 or a computer program loaded from a storage unit 808 to a random-access memory (RAM) 803. Various programs and data required for operations of the device 800 may also be stored in the RAM 803. The computing unit 801, the ROM 802, and the RAM 803 are connected to each other through a bus 804. An input/output (I/O) interface 805 is also connected to the bus 804.

Multiple components in the device 800 are connected to the I/O interface 805. The multiple components include an input unit 806 such as a keyboard and a mouse, an output unit 807 such as various types of displays and speakers, the storage unit 808 such as a magnetic disk and an optical disk, and a communication unit 809 such as a network card, a modem, and a wireless communication transceiver. The communication unit 809 allows the device 800 to exchange information/data with other devices over a computer network such as the Internet and/or various telecommunications networks.

The computing unit 801 may be a general-purpose and/or special-purpose processing component having processing and computing capabilities. Examples of the computing unit 801 include, but are not limited to, a central processing unit (CPU), a graphics processing unit (GPU), a special-purpose artificial intelligence (AI) computing chip, a computing unit executing machine learning models and algorithms, a digital signal processor (DSP) and any appropriate processor, controller, and microcontroller unit. The computing unit 801 performs various methods and processing described above, such as the data processing method for a dialogue system. For example, in some embodiments, the data processing method for a dialogue system may be implemented as computer software programs tangibly contained in a machine-readable medium such as the storage unit 808. In some embodiments, part or all of computer programs may be loaded and/or installed on the device 800 via the ROM 802 and/or the communication unit 809. When the computer programs are loaded to the RAM 803 and executed by the computing unit 801, one or more steps of the preceding data processing method for a dialogue system may be performed. Alternatively, in other embodiments, the computing unit 801 may be configured, in any other suitable manner (for example, by firmware), to perform the data processing method for a dialogue system.

Herein various embodiments of the systems and techniques described in the preceding may be performed in digital electronic circuitry, integrated circuitry, a field-programmable gate array (FPGA), an application-specific integrated circuit (ASIC), an application-specific standard product (ASSP), a system on chip (SOC), a complex programmable logic device (CPLD), computer hardware, firmware, software, and/or combinations thereof. The various embodiments may include implementations in one or more computer programs. The one or more computer programs may be executable and/or interpretable on a programmable system including at least one programmable processor. The programmable processor may be a special-purpose or general-purpose programmable processor for receiving data and instructions from a memory system, at least one input apparatus, and at least one output apparatus and transmitting the data and instructions to the memory system, the at least one input apparatus, and the at least one output apparatus.

Program codes for the implementation of the methods of the present disclosure may be written in one programming language or any combination of multiple programming languages. The program codes may be provided for the processor or controller of a general-purpose computer, a special-purpose computer, or another programmable data processing apparatus, to enable functions/operations specified in flowcharts and/or block diagrams to be implemented when the program codes are executed by the processor or controller. The program codes may be executed entirely on a machine or may be executed partly on a machine. As a stand-alone software package, the program codes may be executed partly on a machine and partly on a remote machine or may be executed entirely on a remote machine or a server.

In the context of the present disclosure, the machine-readable medium may be a tangible medium that may include or store a program that is used by or used in conjunction with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared or semiconductor system, apparatus, or device, or any suitable combination thereof. Concrete examples of the machine-readable storage medium may include an electrical connection based on one or more wires, a portable computer disk, a hard disk, a random-access memory (RAM), a read-only memory (ROM), an erasable programmable read-only memory (EPROM) or a flash memory, an optical fiber, a portable compact disc read-only memory (CD-ROM), an optical storage device, a magnetic storage device, or any suitable combination thereof.

In order that interaction with a user is provided, the systems and techniques described herein may be implemented on a computer. The computer has a display apparatus (for example, a cathode-ray tube (CRT) or a liquid crystal display (LCD) monitor) for displaying information to the user and a keyboard and a pointing apparatus (for example, a mouse or a trackball) through which the user can provide input to the computer. Other types of apparatuses may also be used for providing interaction with a user. For example, feedback provided for the user may be sensory feedback in any form (for example, visual feedback, auditory feedback, or haptic feedback). Moreover, input from the user may be received in any form (including acoustic input, voice input, or haptic input).

The systems and techniques described herein may be implemented in a computing system including a back-end component (for example, a data server), a computing system including a middleware component (for example, an application server), a computing system including a front-end component (for example, a client computer having a graphical user interface or a web browser through which a user can interact with implementations of the systems and techniques described herein), or a computing system including any combination of such back-end, middleware or front-end components. Components of a system may be interconnected by any form or medium of digital data communication (for example, a communication network). Examples of the communication network include a local area network (LAN), a wide area network (WAN), a blockchain network, and the Internet.

A computing system may include a client and a server. The client and the server are usually far away from each other and generally interact through the communication network. The relationship between the client and the server arises by virtue of computer programs running on respective computers and having a client-server relationship. The server may be a cloud server, also referred to as a cloud computing server or a cloud host. As a host product in a cloud computing service system, the server solves the defects of difficult management and weak service scalability in a related physical host and a related virtual private server (VPS). The server may also be a server of a distributed system, or a server combined with a blockchain.

Artificial intelligence is the study of using computers to simulate certain human thinking processes and intelligent behaviors (such as learning, reasoning, thinking, and planning) and has both hardware and software technologies. Artificial intelligence hardware technologies generally include technologies such as sensors, special-purpose artificial intelligence chips, cloud computing, distributed storage, and big data processing. Artificial intelligence software technologies mainly include several major technologies such as computer vision technologies, speech recognition technologies, natural language processing technologies, machine learning/deep learning technologies, big data processing technologies, and knowledge mapping technologies.

Cloud computing refers to a technical system that accesses a shared elastic-and-scalable physical or virtual resource pool through a network, where resources may include servers, operating systems, networks, software, applications, and storage devices and may be deployed and managed in an on-demand, self-service manner by cloud computing. Cloud computing can provide efficient and powerful data processing capabilities for artificial intelligence, the blockchain, other technical applications, and model training.

It is to be understood that various forms of the preceding flows may be used with steps reordered, added, or removed. For example, the steps described in the present disclosure may be executed in parallel, in sequence, or in a different order as long as the desired result of the technical schemes provided in the present disclosure is achieved. The execution sequence of these steps is not limited herein.

The scope of the present disclosure is not limited to the preceding embodiments. It is to be understood by those skilled in the art that various modifications, combinations, subcombinations, and substitutions may be made according to design requirements and other factors. Any modification, equivalent substitution, improvement, and the like made within the spirit and principle of the present disclosure falls within the scope of the present disclosure.

## Claims

1. A data processing method for a dialogue system, **characterized by** comprising:
obtaining (S101) a pre-configured task description, wherein the task description comprises at least one task name and at least one task attribute corresponding to a respective task name;
extracting (S 102), based on a reading comprehension technique, an answer corresponding to the task description from content of a current dialogue with a user; and
completing (S 103) the dialogue with the user according to the answer and a pre-generated dialogue flow.

2. The method of claim 1, wherein the extracting, based on the reading comprehension technique, the answer corresponding to the task description from the content of the current dialogue with the user comprises:
based on the reading comprehension technique, using a dialogue history with the user in a current round of dialogue, a current query from the user, and the task description as input information of a pre-trained key information extraction model, and extracting the answer corresponding to the task description using the key information extraction model.

3. The method of claim 2, wherein the key information extraction model is further configured to:
perform four classifications according to the input information, wherein a result of the four classifications is configured to indicate whether a task name is expressed in the content of the current dialogue or whether a task attribute is expressed in the content of the current dialogue;
in response to the result of the four classifications indicating that the task attribute is expressed in the content of the current dialogue, perform sequence labeling on the current query from the user in the input information, wherein a result of the sequence labeling indicates a position of the answer corresponding to the task attribute in the current query from the user; and
determine the answer corresponding to the task description based on the result of the four classifications and the result of the sequence labeling.

4. The method of claim 2, wherein a main body of the key information extraction model is implemented by a pre-trained semantic recognition model.

5. The method of claim 2, wherein training sample data for training the key information extraction model comprises a dialogue history and a dialogue state, a positive example in which an intention and a slot which exist in the dialogue state are used as a task name and a task attribute, respectively, and a negative example in which an intention and a slot which do not exist in the dialogue state are used as the task name and the task attribute, respectively.

6. The method of claim 1, wherein the completing the dialogue with the user according to the answer and the pre-generated dialogue flow comprises:
filling the answer into the pre-generated dialogue flow, and determining a dialogue policy according to the filled dialogue flow, wherein the dialogue flow is configured to determine whether a task execution condition is satisfied according to a currently extracted answer, and the dialogue policy is configured to obtain, in response to the answer not satisfying the task execution condition, an answer which satisfies the task execution condition through clarification; and
generating dialogue reply information according to the dialogue policy and returning the dialogue reply information to the user.

7. The method of claim 6, wherein the dialogue policy is further configured to:
in response to the answer not satisfying the task execution condition and a number of times of the clarification reaching a preset upper limit value, ending the dialogue; and
in response to the answer satisfying the task execution condition, ending the dialogue.

8. The method of claim 6, wherein the generating the dialogue reply information according to the dialogue policy and returning the dialogue reply information to the user comprises:
generating a first set of dialogue reply information according to the dialogue policy and a reply template which is configured in advance at an execution node of the dialogue flow;
generating a second set of dialogue reply information using a pre-trained dialogue model according to the dialogue policy;
scoring, based on a pre-trained scoring model, each dialogue reply information in the first set of dialogue reply information and the second set of dialogue reply information separately; and
determining the dialogue reply information returned to the user according to a result of the scoring.

9. The method of claim 6, wherein the dialogue flow is generated according to the task description.

10. The method of claim 1, wherein the task description further comprises a plurality of examples of the task name and the task attribute.

11. A data processing apparatus for a dialogue system, **characterized by** comprising:
a task description acquiring module (701) configured to obtain a pre-configured task description, wherein the task description comprises at least one task name and at least one task attribute corresponding to a respective task name;
a reading comprehension module (702) configured to extract, based on a reading comprehension technique, an answer corresponding to the task description from content of a current dialogue with a user; and
a dialogue module (703) configured to complete the dialogue with the user according to the answer and a pre-generated dialogue flow.

12. An electronic device, comprising:
at least one processor; and
a memory communicatively connected to the at least one processor;
wherein the memory stores an instruction executable by the at least one processor, and the instruction is executed by the at least one processor to cause the at least one processor to perform the data processing method for a dialogue system of any one of claims 1 to 10.

13. A non-transitory computer-readable storage medium storing a computer instruction, wherein the computer instruction is configured to cause a computer to perform the data processing method for a dialogue system of any one of claims 1 to 10.

14. A computer program product, comprising a computer program which, when executed by a processor, implements the data processing method for a dialogue system of any one of claims 1 to 10.
